# EUROPEAN PATENT SPECIFICATION

(11) **EP 1 462 653 B1**
(45) Date of publication and mention of the grant of the patent: **16.05.2007**
(21) Application number: 04251636.9
(22) Date of filing: 22.03.2004
(51) Int. Cl.: F04C 2/08, F04C 2/10

(54) **Internal gear pump**
Innenzahnradpumpe
Pompe à engrenages internes

(30) Priority: 25.03.2003 JP 2003083028; 07.05.2003 JP 2003129339; 30.01.2004 JP 2004024200
(43) Date of publication of application: 29.09.2004
(73) Proprietor: Sumitomo Electric Sintered Alloy, Ltd., Kawakami-gun, Okayama 716-0192 (JP)
(72) Inventor: Ogata, Daisuke, Itami-shi, Hyogo (JP); Inui, Naoki, Itami-shi, Hyogo (JP); Arinaga, Shinya, Itami-shi, Hyogo (JP); Sasaki, Harumitsu, Itami-shi, Hyogo (JP)
(74) Representative: Cross, Rupert Edward Blount

(56) References cited:
- EP-A- 0 785 360
- EP-A- 1 016 784
- PATENT ABSTRACTS OF JAPAN vol. 0110, no. 48 (M-561), 13 February 1987 (1987-02-13) -& JP 61 210281 A (YAMADA SEISAKUSHO:KK), 18 September 1986 (1986-09-18)

## Description

### BACKGROUND OF THE INVENTION

### Field of the Invention

The present invention relates to a noise-reduced internal gear pump that incorporates an inner rotor having an addendum formed by a smooth curve and a dedendum formed by a hypocycloid.

### Description of the Background Art

The published Japanese patent application *Tokuhyouhei* 11-811935 has disclosed an internal gear pump that is intended to reduce the noise, improve the mechanical efficiency, and increase the pump life.

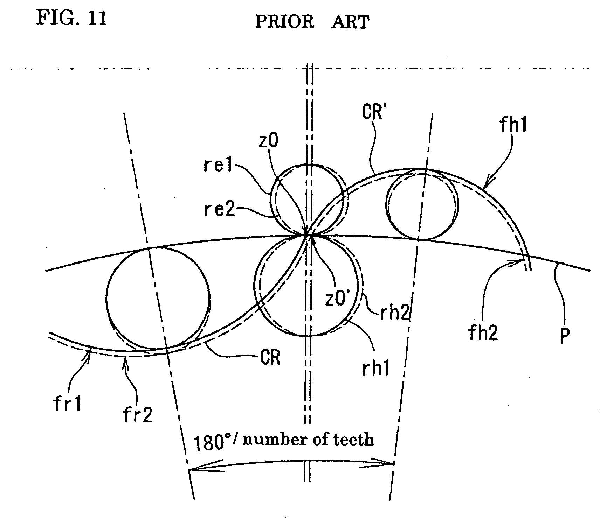

Figure 11 shows the profile of the gear tooth of the internal gear pump disclosed in the *Tokuhyouhei* 11-811935. The pump combines an inner rotor having an addendum formed by an epicycloid and a dedendum formed by a hypocycloid (the tooth profile is shown in a dotted line) and an outer rotor having an addendum formed by a hypocycloid and a dedendum formed by an epicycloid (the tooth profile is shown in a solid line). An epicycloidal profile fh1 of the dedendum of the outer rotor is formed by the locus of one point on a first formation circle re1 that is circumscribed on a pitch circle P and rolls without slipping on the circle P from a starting point zO. An epicycloidal profile fh2 of the addendum of the inner rotor is formed by the locus of one point on a second formation circle re2 that is circumscribed on the pitch circle P and rolls without slipping on the circle P from a starting point zO'. A hypocycloidal profile fr1 of the addendum of the outer rotor is formed by the locus of one point on a third formation circle rh1 that is inscribed in the pitch circle P and rolls without slipping on the circle P from the starting point zO. A hypocycloidal profile fr2 of the dedendum of the inner rotor is formed by the locus of one point on a fourth formation circle rh2 that is inscribed in the pitch circle P and rolls without slipping on the circle P from the starting point zO'. The formation circles re1, re2, rh1, and rh2 have a different diameter. A clearance CR between the addendum of the outer rotor and the corresponding dedendum of the inner rotor is equal to the difference in diameter between the third and fourth formation circles rh1 and rh2. A clearance CR' between the dedendum of the outer rotor and the corresponding addendum of the inner rotor is equal to the difference in diameter between the first and second formation circles re1 and re2. When the amount of eccentricity between the outer and inner rotors is "e," the clearance between the two rotors at the position where the two rotors interlock with each other most closely is nearly equal to the clearance between the two rotors at the position where the two rotors interlock with each other most loosely.

An internal gear pump is required to have a clearance between the outer rotor and the inner rotor to enable the rotors to rotate smoothly. In the pump disclosed in the *Tokuhyouhei* 11-811935, the clearance is created by providing the difference in diameter between the first and second formation circles re1 and re2 and between the third and fourth formation circles rh1 and rh2. In this case, when the inner rotor is pressed against the outer rotor at the position where the teeth of the two rotors engage, there exists a minimum clearance between each tooth of the inner rotor and the opposed tooth of the outer rotor. Hereinafter this minimum clearance is referred to as an "interrotor clearance" including the expression in the section "Claims." The present inventors found that when the pump is operated, the interrotor clearance increases abruptly from zero at the engaging portion, causing the noise.

The document EP 0 785 360 discloses a pump according to the preamble of claims 1 and 2.

### SUMMARY OF THE INVENTION

An object of the present invention is to offer an internal gear pump in which an abrupt change in the interrotor clearance is eliminated to reduce the noise further.

According to one aspect of the present invention, an internal gear pump comprises an internal gear pump comprising: (a) an inner rotor having an addendum formed by an epicycloid and a dedendum formed by a hypocycloid; and (b) an outer rotor; the inner and outer rotors having nominal eccentricity e between the center of the inner rotor and the center of the outer rotor and having a maximum value t of the interrotor clearance defined as the minimum clearance between each tooth of the inner rotor and the opposed tooth of the outer rotor when the inner rotor is pressed against the outer rotor at the position where the teeth of the two rotors engage; characterized in that said outer rotor has a tooth profile determined by the steps of: (b1) revolving the center of the inner rotor around the center of the outer rotor so as to form a circle having a diameter of 2e + t; (b2) rotating the inner rotor on its own axis 1/n times while the center of the inner rotor makes one revolution in the circular orbit, where "n" is the number of teeth of the inner rotor; (b3) drawing the envelope of the group of the tooth-profile curves of the inner rotor formed by its revolution; and (b4) using the envelope as the tooth profile of the outer rotor.

According to another aspect of the present invention, an internal gear pump comprising: an inner rotor having an addendum and a dedendum, the dedendum being formed by a hypocycloid; and an outer rotor; the inner and outer rotors having a nominal eccentricity e between the center of the inner rotor and the center of the outer rotor and having a maximum value t of the interrotor clearance defined as the minimum clearance between each tooth of the inner rotor and the opposed tooth of the outer rotor when the inner rotor is pressed against the outer rotor at the position where the teeth of the two rotors engage; characterized in that (a) said addendum of the inner rotor is formed by a smooth curve comprising one of a trochoidal curve, a spline curve, or a major portion of an outer half of an ellipse having its major axis perpendicular to a radius of the inner rotor, and in that (b) said outer rotor has a tooth profile determined by the steps of: (b1) revolving the center of the inner rotor around the center of the outer rotor so as to form a circle having a diameter of 2e + t; (b2) rotating the inner rotor on its own axis 1/n times while the center of the inner rotor makes one revolution in the circular orbit, where "n" is the number of teeth of the inner rotor; (b3) drawing the envelope of the group of the tooth-profile curves of the inner rotor formed by its revolution; and (b4) using the envelope as the tooth profile of the outer rotor.

Preferably, for either aspect of this invention, the addendum of the inner rotor is modified by the following steps.
(a1a) The center of a tentative inner rotor is revolved around the center of a tentative outer rotor so as to form a circle having a diameter of 2e + t.
(a1b) The tentative inner rotor is rotated on its own axis 1/n times while the center of the tentative inner rotor makes one revolution in the circular orbit.
(a1c) The envelope of the group of the tooth-profile curves of the tentative inner rotor formed by its revolution is drawn.
(a1d) The envelope is used as the tooth profile of the tentative outer rotor.
(a1e) By the use of the tooth profiles of the tentative inner and outer rotors, the position of the trailing end of a tooth face, necessary to close up the pump chamber, in the addendum of the tentative inner rotor is determined. The tooth face has the leading end at the top of the addendum.
(a1f) The position of the tooth-engaging point where the tentative inner rotor engages the tentative outer rotor is determined.
(a1g) The position of another tooth face lying at the location from the position of the above-described trailing end to the tooth-engaging point is shifted to a place inside the curve forming the original tooth profile.
(a1h) The profile after the position modification is used as the tooth profile of the addendum of the inner rotor.

In the above description, the tooth-engaging point is the point nearest to the top of the addendum of the inner rotor in the inner rotor's tooth face that is pressed against the outer rotor to give the rotary force to it when the inner rotor forces the outer rotor to rotate.

As described above, the tooth profile of the outer rotor is formed through the following procedure. The inner rotor is revolved on the circle having a diameter of 2e + t. While the inner rotor makes one revolution, it is rotated on its own axis 1/n times. This operation produces a group of tooth-profile curves of the inner rotor. The envelope of the group is used to form the tooth profile of the outer rotor. In this case, the interrotor clearance increases gradually from zero to the maximum clearance produced between the top of the addendum of the outer rotor and the top of the addendum of the inner rotor. In other words, the amount of relative movement between the two rotors during the rotation is small. Consequently, the two rotors can rotate smoothly, producing only suppressed vibrations. As a result, the operation noise of the pump can be reduced in comparison with conventional pumps. The reduced vibration increases the pump life.

As described, the pump has an inner rotor whose tooth profile is preferably modified by the following procedure. The envelope of the group of the tooth-profile curves of a tentative inner rotor formed by its revolution is used as the tooth profile of a tentative outer rotor. The use of the tooth profiles of the tentative inner and outer rotors determines the position to modify the tooth face of the addendum of the inner rotor. The pump has an outer rotor whose tooth profile is formed by the same procedure as described above by using the inner rotor whose tooth face is position-modified. The pump suppresses the mutual collision of the teeth of the outer and inner rotors at the non-engaging portion when the pump is operated. As a result, the pump further reduces the noise.

### BRIEF DESCRIPTION OF THE DRAWINGS

Figure 1 is a schematic diagram showing an embodiment of the pump of the present invention, in which the cover of the pump is removed.
Figure 2 is a diagram showing a shift of the tooth profile of the inner rotor when it is revolved while it is rotated on its own axis.
Figure 3 is a diagram showing the tooth profile of the outer rotor formed by the envelope of the group of the tooth-profile curves of the inner rotor.
Figure 4 is an enlarged diagram showing the difference in tooth profile between the outer rotor of the present invention and that of a prior art.
Figure 5A is a diagram showing an example of the shift of the interrotor clearance of the pump having the tooth profile of the present invention, and Fig. 5B is a diagram showing another example of the shift.
Figure 6A is a diagram showing an example of the shift of the interrotor clearance of the pump having the tooth profile of a prior art, and Fig. 6B is a diagram showing another example of the shift.
Figure 7A is a chart showing the waveform of the vibration in the pump case of the pump having the tooth profile of the present invention while the rotors are rotating under a certain condition, and, for comparison, Fig. 7B is of the pump having the tooth profile of a prior art while the rotors are rotating under the same condition as in Fig. 7A.
Figure 8A is a chart showing the waveform of the vibration in the pump case of the pump having the tooth profile of the present invention while the rotors are rotating under another condition, and, for comparison, Fig. 8B is of the pump having the tooth profile of a prior art while the rotors are rotating under the same condition as in Fig. 8A.
Figure 9A is a chart showing the waveform of the vibration in the pump case of the pump having the tooth profile of the present invention while the rotors are rotating under yet another condition, and, for comparison, Fig. 9B is of the pump having the tooth profile of a prior art while the rotors are rotating under the same condition as in Fig. 9A.
Figure 10A is a chart showing the waveform of the vibration in the pump case of the pump having the tooth profile of the present invention while the rotors are rotating under yet another condition, and, for comparison, Fig. 10B is of the pump having the tooth profile of a prior art while the rotors are rotating under the same condition as in Fig. 10A.
Figure 11 is a diagram showing the method of forming the profile of the gear tooth of the internal gear pump of a prior art.
Figure 12 is a diagram showing the tooth profile of the inner rotor having the addendum formed by a curve constituting a major portion of the upper half of an ellipse, in which the diagram shows the tooth face before it is modified.
Figure 13 is a diagram showing the tooth profile of the inner rotor having the addendum formed by a curve constituting a major portion of the upper half of an ellipse, in which the diagram shows the tooth face after it is modified.
Figure 14 is a diagram showing the tooth profile of the inner rotor in which the tooth face is modified in two locations: one location is ahead of the center of the curve forming the addendum when the rotor is rotated and the other is behind the center.
Figure 15A is a diagram showing an example of the shift of the interrotor clearance before the tooth face is modified, and Fig. 15B is a diagram showing another example of the shift.
Figure 16A is a diagram showing an example of the shift of the interrotor clearance after the tooth face is modified, and Fig. 16B is a diagram showing another example of the shift.

### DETAILED DESCRIPTION OF THE INVENTION

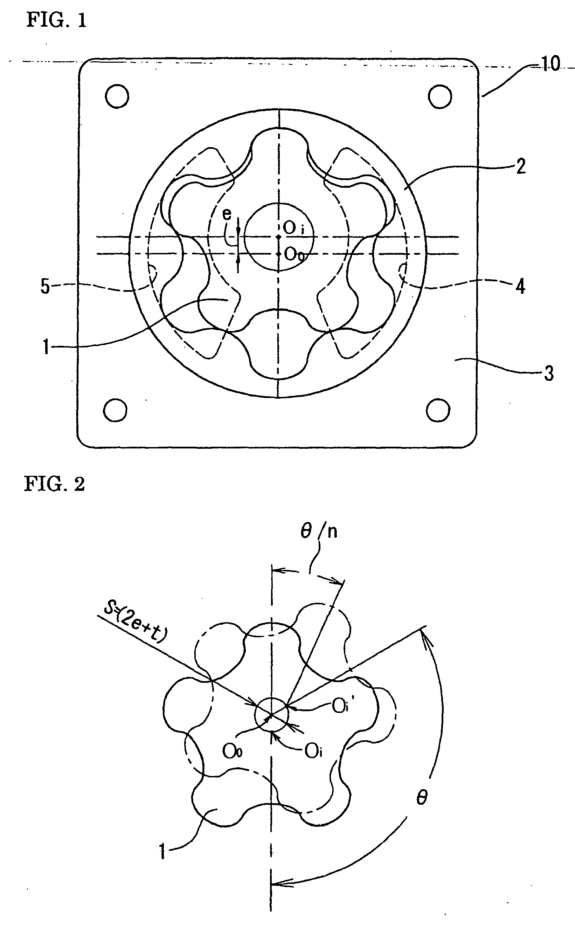

An embodiment of the present invention is explained below by referring to Figs. 1 to 3. As shown in Fig. 1, an internal gear pump 10 comprises an inner rotor 1 of which the number of teeth is "n," an outer rotor 2 of which the number of teeth is "n + 1," and a pump case (housing) 3 housing the two rotors. The pump case 3 is provided with a suction port 4 and a delivery port 5.

In the pump 10, the inner rotor 1 is a driving gear and the outer rotor 2 is a driven gear. The inner rotor 1 has a rotating center Oi, and the outer rotor 2 has a rotating center Oo. The centers Oo and Oi are eccentric to each other by the amount of "e."

The inner rotor 1 has a tooth profile explained by referring to Fig. 11. More specifically, the addendum has an epicycloidal profile formed by the locus of one point on the formation circle re2 that is circumscribed on the pitch circle P and rolls on the circle. The dedendum has a hypocycloidal profile formed by the locus of one point on the formation circle rh2 that is inscribed in the pitch circle P and rolls on the circle.

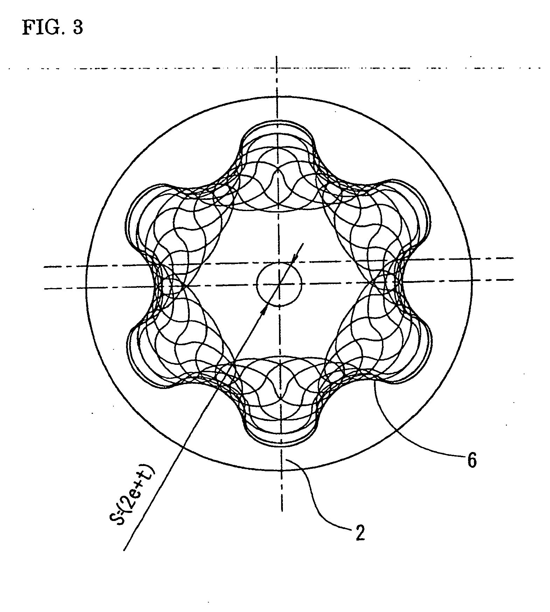

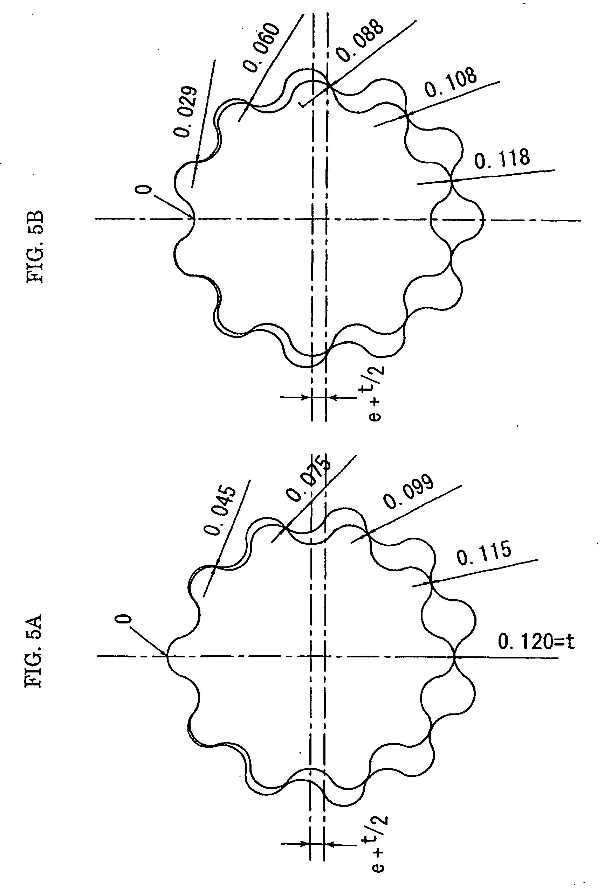

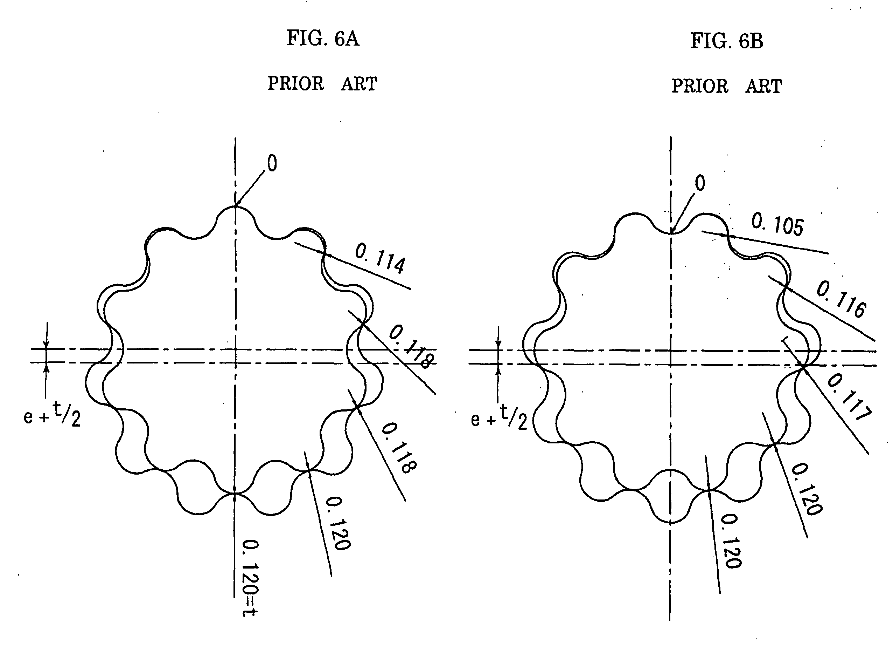

On the other hand, the outer rotor 2 has a tooth profile determined by the method illustrated in Figs. 2 and 3. As shown in Fig. 2, the center Oi of the inner rotor 1 is revolved around the center Oo of the outer rotor 2 so as to form a circle S having a diameter of 2e + t, where "t" is the maximum value of the interrotor clearance between the outer rotor 2 and the inner rotor 1 pressed against the outer rotor 2 (see Figs. 5A and 6A).

While the center Oi of the inner rotor 1 makes one revolution in the circular orbit S, the inner rotor 1 is rotated on its own axis 1/n times. ((360/n) degrees). Alternate long and short dashed lines in Fig. 2 show a tooth-profile curve of the inner rotor at the position when the center Oi of the inner rotor 1 revolves by an angle of θ degree around the center Oo of the outer rotor to shift to a point Oi' and concurrently the inner rotor 1 is rotated on its own axis by an angle of (θ/n) degrees. As shown in Fig. 3, the tooth-profile curve varies according to the revolution accompanied by the rotation. The group of the tooth-profile curves has an envelope 6, which is used to form the tooth profile of the outer rotor 2.

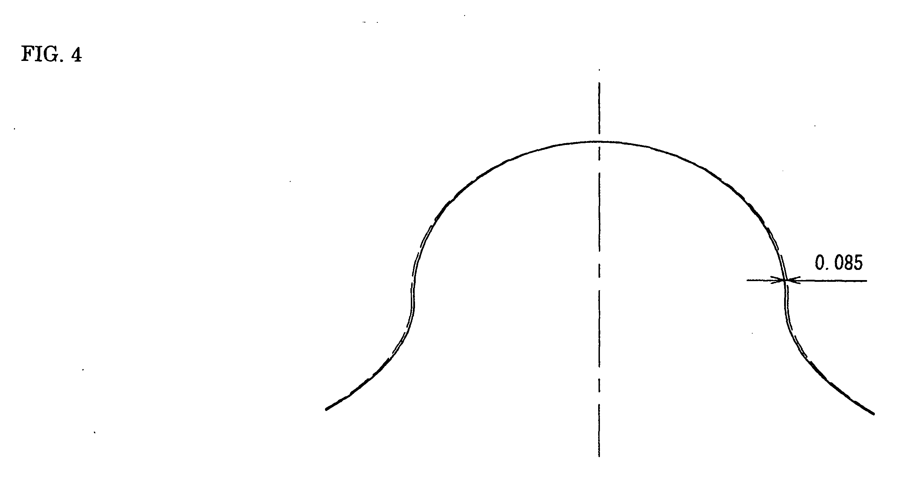

Figure 4 is an enlarged diagram showing the difference in tooth profile between the outer rotor of the present invention formed by the envelope of the group of the tooth-profile curves of the inner rotor as explained by referring to Figs. 2 and 3 and the outer rotor of a prior art formed by the method explained by referring to Fig 11. In Fig. 4, the solid line shows the tooth profile of the pump of the present invention and the broken line shows that of a prior art. The two profiles differ with each other obviously in the vicinity of the boundary between the addendum and the dedendum.

Figures 5A and 5B show shifts of the interrotor clearance of the pump of the present invention when the inner rotor 1 and the outer rotor 2 each having the following features are combined:
Inner rotor:
   Number of teeth: 10
   Pitch circle: diameter: 62.00 (unit is mm, hereinafter the same is applied.)
   Epicycloid formation circle: diameter: 3.10
   Hypocycloid formation circle: diameter: 3.10
Outer rotor:
   Number of teeth: 11
   Amount of eccentricity between the two rotors: 3.10
   Maximum value of the interrotor clearance: 0.12

Figures 6A and 6B show shifts of the interrotor clearance of the pump of a prior art having the tooth profile formed by the method explained by referring to Fig. 11. The pump has the following features:
Inner rotor:
   Number of teeth: 10
   Pitch circle: diameter: 62.00 (unit is mm, hereinafter the same is applied.)
   Epicycloid formation circle: diameter: 3.10
   Hypocycloid formation circle: diameter: 3.10
Outer rotor:
   Number of teeth: 11
   Pitch circle: diameter: 68.20
   Epicycloid formation circle: diameter: 3.04
   Hypocycloid formation circle: diameter: 3.16
   Amount of eccentricity between the two rotors: 3.10

Figures 5A and 6A show examples in which the position of zero interrotor clearance occurs at the position where the top of the addendum of the inner rotor 1 is coincident with the bottom of the dedendum of the outer rotor 2. Figures 5B and 6B show examples in which the position of zero interrotor clearance occurs at the position where the bottom of the dedendum of the inner rotor 1 is coincident with the top of the addendum of the outer rotor 2.

In the case of the tooth profile of the prior art, as shown in Fig. 6A, the interrotor clearance varies in the following order: 0 → 0.114 → 0.118 → 0.118 → 0.120 → 0.120 (unit is mm, hereinafter the same is applied). In Fig. 6B, the interrotor clearance varies in the following order: 0 → 0.105 → 0.116 → 0.117 → 0.120 → 0.120. In both cases, the interrotor clearance increases abruptly from zero.

In contrast, with the tooth profile of the present invention, as shown in Fig. 5A, the interrotor clearance varies in the following order: 0 → 0.045 → 0.075 → 0.099 → 0.115 → 0.120. In Fig. 5B, the interrotor clearance varies in the following order: 0 → 0.029 → 0.060 → 0.088 → 0.108 → 0.118. In both cases, the interrotor clearance varies mildly.

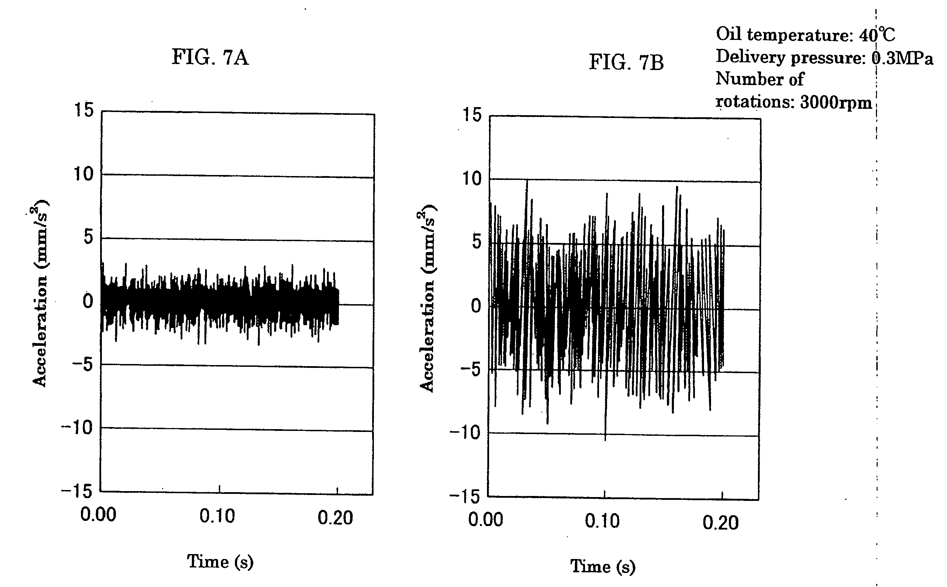

Figures 7A to 10B show the results of the measurement to compare the performance of the pump having the tooth profile of the present invention and the pump having the tooth profile of a prior art. The results are shown by the waveform of the vibration in the pump case while the rotors are rotating. Figures 7A to 10A show the waveform for the tooth profile of the present invention, and Figs. 7B to 10B show that of the prior art. The pumps used in the comparison test combine the inner rotor 1 with 10 teeth and the outer rotor 2 with 11 teeth, whose tooth profiles are shown in Figs. 5A to 6B.

Figures 7A and 7B show the test results under the following conditions: oil temperature: 40 °C, delivery pressure: 0.3 MPa, and number of rotations: 3,000 rpm.

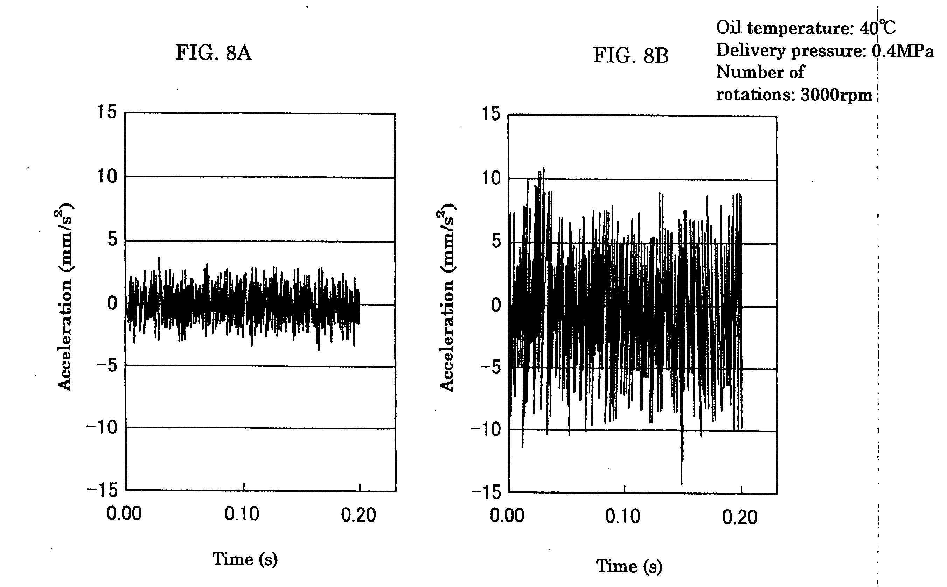

Figures 8A and 8B show the test results under the following conditions: oil temperature: 40 °C, delivery pressure: 0.4 MPa, and number of rotations: 3,000 rpm.

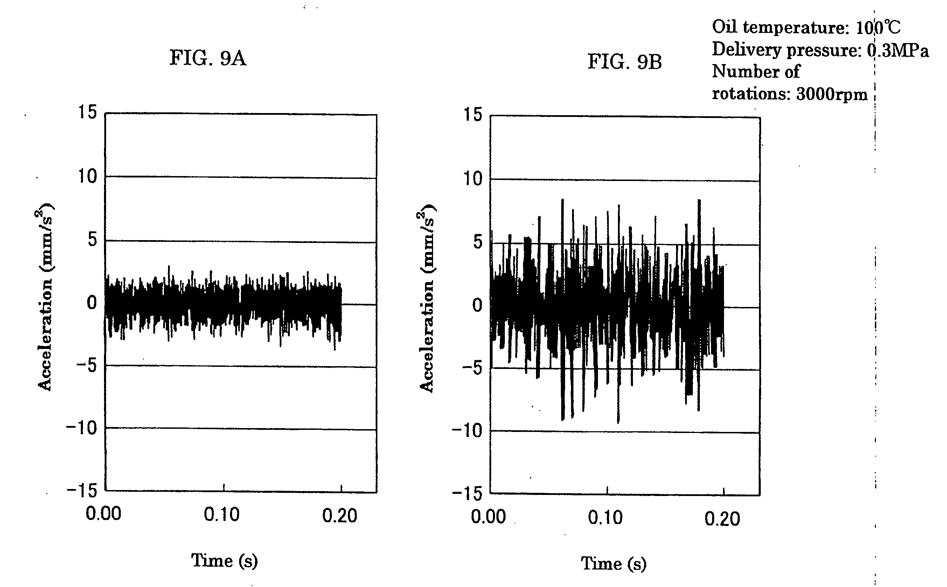

Figures 9A and 9B show the test results under the following conditions: oil temperature: 100 °C, delivery pressure: 0.3 MPa, and number of rotations: 3,000 rpm.

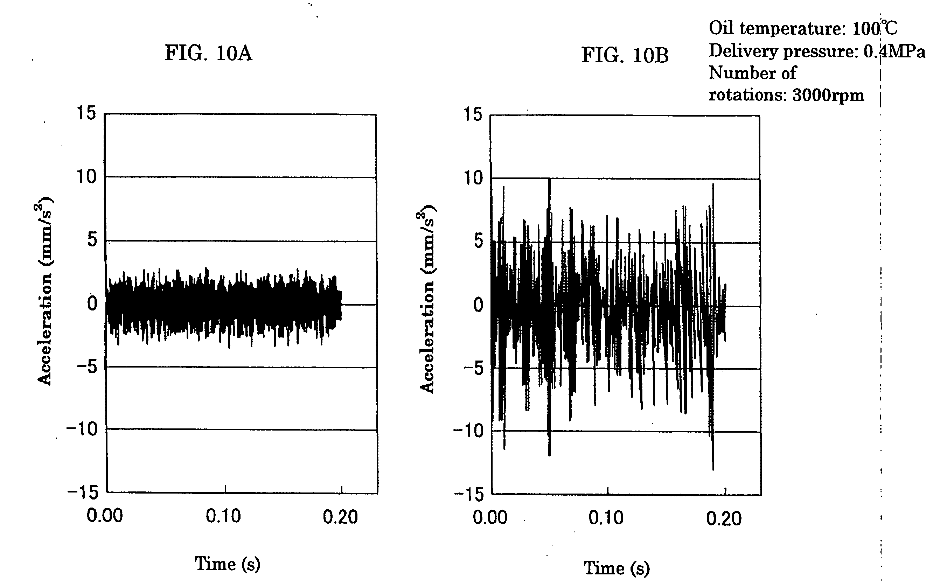

Figures 10A and 10B show the test results under the following conditions: oil temperature : 100 °C, delivery pressure : 0.4 MPa, and number of rotations: 3,000 rpm.

As can be seen from these results, the pump having the tooth profile of the present invention produces a smaller vibration under any of these conditions. As the vibration decreases, the produced noise decreases and the pump life is increased.

As explained above, the foregoing structure of the present invention eliminates the abrupt change in the interrotor clearance, so that the noise originated from the abrupt clearance change can be suppressed. However, the interrotor clearance increases gradually from zero to the maximum clearance produced by the top of the addendum of the outer rotor and the top of the addendum of the inner rotor. As a result, the teeth of the inner and outer rotors may collide against each other at the non-engaging portion, particularly at a portion where the interrotor clearance is small. It is possible that this collision will become a new source of noise.

Accordingly, the present invention also offers a measure to suppress the noise resulting from the collision (hereinafter referred to as "hitting") of the teeth at the non-engaging portion. The measure is effective even when the inner rotor has a tooth profile other than the cycloid.

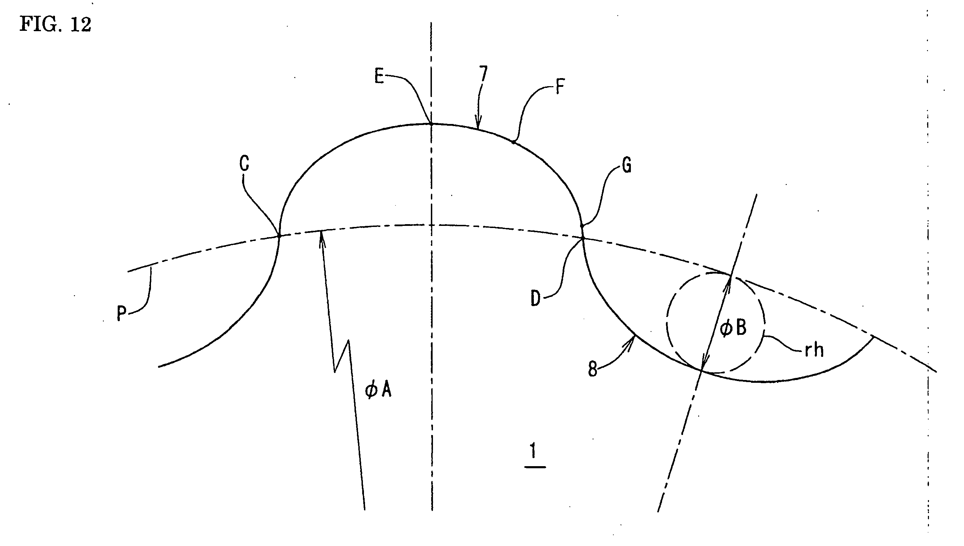

The measure to suppress the hitting of the teeth at the non-engaging portion is explained below by referring to a concrete example. Figure 12 shows the tooth profile of an inner rotor 1. The tooth profile has an addendum 7 formed by a curve constituting a major portion of the upper half of an ellipse when its major axis is horizontally positioned and a dedendum 8 formed by a hypocycloidal curve created by a formation circle (internally rolling circle) rh (diameter: B) that is inscribed in the pitch circle (base circle) P (diameter: A) and rolls on the circle P without slipping. The curve of the addendum 7 is center-symmetric, and its one end is connected to the trailing end of the curve of the dedendum 8 at a point C on the pitch circle P and the other end is connected to the starting end of the curve of the dedendum 8 at a point D on the pitch circle P.

When the inner rotor 1 has the tooth profile as shown in Fig. 12, the tooth profile of the outer rotor is formed through the following procedure. As explained by referring to Figs. 2 and 3, the center of the inner rotor is revolved around the center of the outer rotor so as to form a circle having a diameter of 2e + t. While the center of the inner rotor makes one revolution in the circular orbit, the inner rotor is rotated on its own axis 1/n times. This operation produces a group of tooth-profile curves of the inner rotor. When the envelope of the group is used to form the tooth profile of the outer rotor, interrotor clearances at some non-engaging portions between the zero clearance and the maximum clearance produced by the top of the addendum of the outer rotor and the top of the addendum of the inner rotor can be made slightly wider than the original maximum clearance.

As a result, the noise originated from the abrupt change in interrotor clearance can be suppressed. In addition, the hitting of the teeth of the inner and outer rotors can also be suppressed because the interrotor clearance is increased at the non-engaging portion between the zero clearance and the maximum clearance produced by the two tops. However, the outer rotor has a sliding clearance with the pump case. Consequently, the center of the outer rotor tends to oscillate during the rotation. If the magnitude of the oscillation is greater than the interrotor clearance at some non-engaging portions, the hitting of the teeth of the two rotors cannot be suppressed sufficiently.

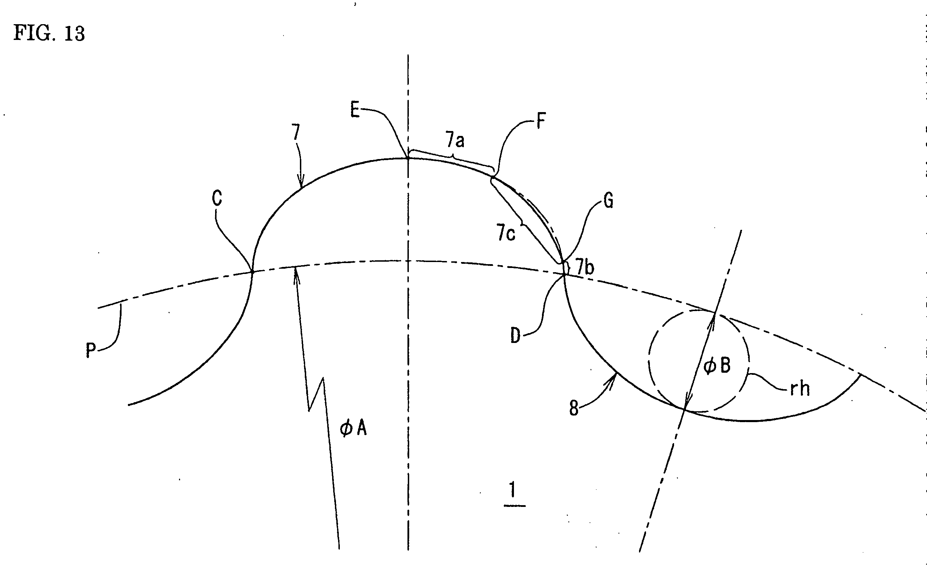

To further prevent the foregoing tooth hitting, the following arrangement is employed. As shown in Fig. 13, a point F is determined as the trailing end of a tooth face 7a necessary to close up the pump chamber. A point G is determined as the tooth-engaging point. A tooth face 7c lying at the location from the point F to the point G is position-modified to a place shown in a solid line, which is located inside the original elliptical curve shown in alternate long and short dashed lines. The profile after the position modification is used as the tooth profile of the inner rotor. In Fig. 13, a point E is the top of the addendum, and points G and D are the leading end and the trailing end, respectively, of a tooth face 7b necessary to engage the outer rotor. As can be seen from Fig. 13, the position-modified tooth face 7c has a radius of curvature larger than that of the original elliptical curve. However, the radius is not limited to the one shown in Fig. 13.

The above-described modification of the tooth profile of the inner rotor and the subsequent determination of the tooth profile of the outer rotor to be combined with the tooth profile-modified inner rotor are performed by the following procedure.

First, the tooth profile of a tentative outer rotor is formed by using the envelope of the group of tooth-profile curves of a tentative inner rotor formed by its revolution. This formation method is explained below.

A tentative inner rotor whose tooth profile is unmodified is revolved around the center of a tentative outer rotor so as to form a circle having a diameter of 2e + t. While the center of the tentative inner rotor makes one revolution in the circular orbit, the tentative inner rotor is rotated on its own axis 1/n times. This operation produces a group of tooth-profile curves of the tentative inner rotor. The envelope of the group is used to determine the tooth profile of the tentative outer rotor.

Next, the tooth profiles of the tentative inner and outer rotors are used to determine the position of the trailing end of the tooth face 7a of the inner rotor necessary to close up the pump chamber (the position is denoted as the point F in Figs. 12 to 14).

The tooth face 7c lying at the location from the trailing-end position, the point F, to the tooth-engaging point (the point G in Figs. 12 to 14) is position-modified by shifting it to a place inside the curve forming the original tooth profile. The profile after the position modification is used as the tooth profile of the addendum of the inner rotor.

Subsequently, the center of the inner rotor whose addendum has the finally determined tooth profile is revolved around the center of the outer rotor whose tooth profile is to be finally determined so as to form a circle having a diameter of 2e + t. While the center of the inner rotor makes one revolution in the circular orbit, the inner rotor is rotated on its own axis l/n times. This operation produces a group of tooth-profile curves of the inner rotor. The envelope of the group is used to finally determine the tooth profile of the outer rotor.

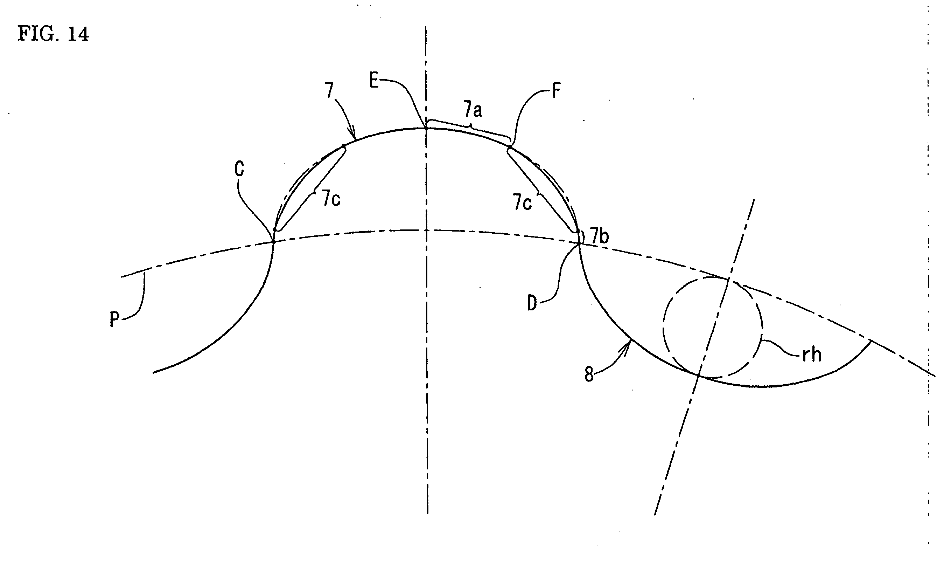

The modification of the position of the tooth face 7c is performed in at least one of the two locations: one location is ahead of the center of the curve forming the addendum 7 when the rotor is rotated and the other is behind the center. Figure 14 shows the case in which the modification is performed in both locations.

The trailing end position F of the tooth face 7a needed to close up the pump chamber varies according to the position at which the pump chamber is disconnected from the suction port and the delivery port. There are two methods for the disconnection: one method disconnects the pump chamber from the suction port and the delivery port at the position where the pump chamber reaches the maximum volume and the other method disconnects the pump chamber from the suction port and the delivery port at the position where the volume of the pump chamber begins to decrease from the maximum value. The tooth face 7a has a smaller region in the latter case than in the former case.

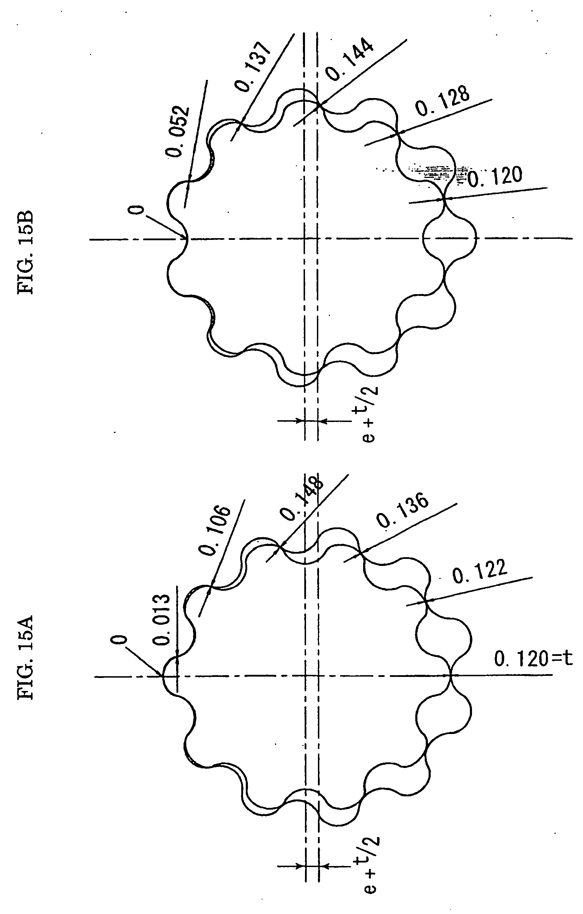

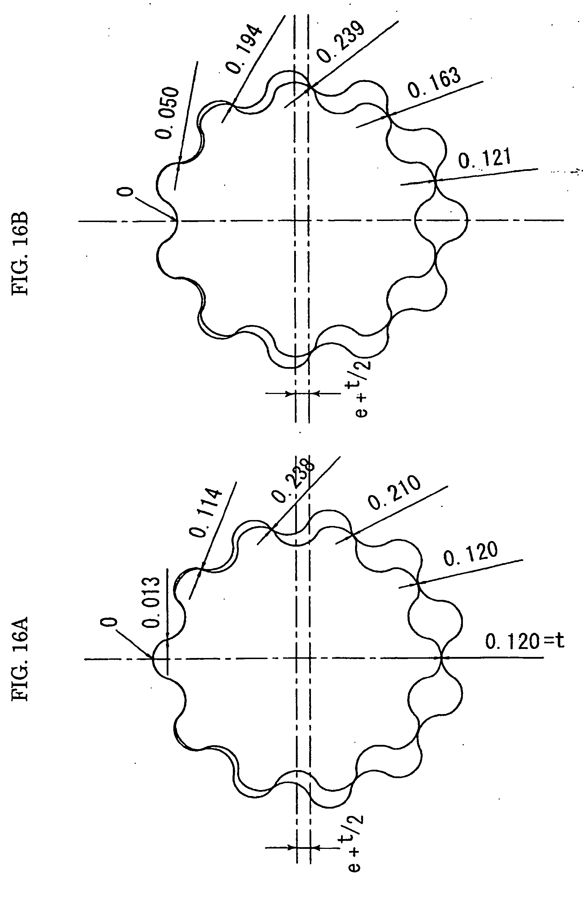

Figures 15A and 15B show shifts of the interrotor clearance of the pump before the tooth profile of the inner rotor is modified. Figures 16A and 16B show shifts of the interrotor clearance of the pump after the tooth profile of the inner rotor is modified.

The measurement of the shifts was performed by using the inner and outer rotors that have the following features:
Inner rotor:
   Number of teeth: 10
   Addendum circle: diameter: 68.20
   Pitch circle: diameter: 62.00
   Ellipse used for forming the addendum: half of the minor axis: 4.17655, half of the major axis: 4.91633
   Hypocycloid formation circle for forming the dedendum: diameter: 3.10
   Radius of curvature of the modified tooth face: 5.3
Outer rotor:
   Number of teeth: 11
   Amount of eccentricity between the two rotors: 3.10
   Maximum value of the interrotor clearance: 0.12

Figures 15A and 16A show examples in which the position of zero clearance occurs at the position where the top of the addendum of the inner rotor is coincident with the bottom of the dedendum of the outer rotor. Figures 15B and 16B show examples in which the position of zero clearance occurs at the position where the bottom of the dedendum of the inner rotor is coincident with the top of the addendum of the outer rotor.

In the case of the tooth profile before it is modified, as shown in Fig. 15A, the interrotor clearance varies in the following order: 0 → 0.013 → 0.106 → 0.148 → 0.136 → 0.122 → 0.120. In Fig. 15B, the interrotor clearance varies in the following order: 0 → 0.052 → 0.137 → 0.144 → 0.128 → 0.120.

In contrast, with the tooth profile after it is modified, as shown in Fig. 16A, the interrotor clearance varies in the following order. 0 → 0.013 → 0.114 → 0.238 → 0.210 → 0.120 → 0.120. In Fig. 16B, the interrotor clearance varies in the following order: 0 → 0.050 → 0.194 → 0.239 → 0.163 → 0.121. As can be seen from these data, the clearance at the engaging portion and the interrotor clearance at the maximum clearance portion between the two tops have only a negligible difference from those shown in Figs. 15A and 15B. However, the interrotor clearance at the other portions are considerably larger than those shown in Figs. 15A and 15B. As a result, the modified tooth profile can not only prevent the abrupt increase in the interrotor clearance from the zero clearance in the engaging portion (and accompanying noise generation) but also suppress the tooth hitting in the non-engaging portion (and accompanying noise generation).

In the above-described embodiment, the inner rotor has the addendum with the profile formed by a curve constituting a major portion of the upper half of an ellipse. However, the profile is not limited to this type. Any profile having a smooth curve may be used, such as an epicycloidal curve, a trochoidal curve, or a spline curve.

## Claims

1. An internal gear pump comprising:
(a) an inner rotor (1) having an addendum formed by an epicycloid and a dedendum formed by a hypocycloid; and
(b) an outer rotor (2);
the inner and outer rotors (1, 2) having nominal eccentricity e between the center of the inner rotor (1) and the center of the outer rotor (2) and having a maximum value t of the interrotor clearance defined as the minimum clearance between each tooth of the inner rotor (1) and the opposed tooth of the outer rotor (2) when the inner rotor (1) is pressed against the outer rotor (2) at the position where the teeth of the two rotors engage;
**characterized in that** said outer rotor (1) has a tooth profile determined by the steps of :
(b1) revolving the center of the inner rotor (1) around the center of the outer rotor (2) so as to form a circle having a diameter of 2e + t;
(b2) rotating the inner rotor (1) on its own axis 1/n times while the center of the inner rotor (1) makes one revolution in the circular orbit, where "n" is the number of teeth of the inner rotor (1);
(b3) drawing the envelope of the group of the tooth-profile curves of the inner rotor (1) formed by its revolution; and
(b4) using the envelope as the tooth profile of the outer rotor (2).

2. An internal gear pump comprising:
an inner rotor (1) having an addendum and a dedendum, the dedendum being formed by a hypocycloid; and
an outer rotor (2);
the inner and outer rotors (1, 2) having nominal eccentricity e between the center of the inner rotor (1) and the center of the outer rotor (2) and having a maximum value t of the interrotor clearance defined as the minimum clearance between each tooth of the inner rotor (1) and the opposed tooth of the outer rotor (2) when the inner rotor (1) is pressed against the outer rotor (2) at the position where the teeth of the two rotors engage;
**characterized in that**
(a) said addendum of the inner rotor (1) is formed by a smooth curve comprising one of a trochoidal curve, a spline curve, or a major portion of an outer half of an ellipse having its major axis perpendicular to a radius of the inner rotor (1),
and **in that**
(b) said outer rotor (2) has a tooth profile determined by the steps of:
(b1) revolving the center of the inner rotor (1) around the center of the outer rotor (2) so as to form a circle having a diameter of 2e + t;
(b2) rotating the inner rotor (1) on its own axis 1/n times while the center of the inner rotor (1) makes one revolution in the circular orbit, where "n" is the number of teeth of the inner rotor (1);
(b3) drawing the envelope of the group of the tooth-profile curves of the inner rotor (1) formed by its revolution; and
(b4) using the envelope as the tooth profile of the outer rotor (2).

3. An internal gear pump as claimed in either of claims 1 or 2, wherein
(a1) the addendum of the inner rotor (1) is modified by the steps of:
(a1a) revolving the center of a tentative inner rotor around the center of a tentative outer rotor so as to form a circle having a diameter of 2e + t;
(a1b) rotating the tentative inner rotor on its own axis 1/n times while the center of the tentative inner rotor makes one revolution in the circular orbit;
(a1c) drawing the envelope of the group of the tooth-profile curves of the tentative inner rotor formed by its revolution;
(a1d) using the envelope as the tooth profile of the tentative outer rotor;
(a1e) by using the tooth profiles of the tentative inner and outer rotors, determining the position of the trailing end of a tooth face, necessary to close up the pump chamber, in the addendum of the tentative inner rotor;
the tooth face having the leading end at the top of the addendum; (a1f) determining the position of the tooth-engaging point where the tentative inner rotor engages the tentative outer rotor;
(a1g) shifting the position of another tooth face lying at the location from the position of the above-described trailing end to the tooth-engaging point to a place inside the curve forming the original tooth profile; and
(a1h) using the profile after the position modification as the tooth profile of the addendum of the inner rotor.

## Patentansprüche

1. Innenzahnradpumpe, die umfasst:
(a) einen inneren Rotor (1) mit einem Kopfteil, der durch eine Epizykloide gebildet wird, und einem Fußteil, der durch eine Hypozykloide gebildet wird; und
(b) einen äußeren Rotor (2),
wobei der innere und der äußere Rotor (1, 2) eine Nenn-Exzentrizität e zwischen dem Mittelpunkt des inneren Rotors (1) und dem Mittelpunkt des äußeren Rotors (2) haben und einen Maximalwert (t) des Zwischenrotorabstandes haben, der als der minimale Abstand zwischen jedem Zahn des inneren Rotors (1) und dem gegenüberliegenden Zahn des äußeren Rotors (2), wenn der innere Rotor (1) an den äußeren Rotor (2) gepresst wird, an der Position definiert ist, an der die Zähne der zwei Rotoren in Eingriff sind;
**dadurch gekennzeichnet, dass** der äußere Rotor (1) ein Zahnprofil hat, das durch die folgenden Schritte bestimmt wird:
(b1) Rotieren des Mittelpunktes des inneren Rotors (1) um den Mittelpunkt des äußeren Rotors (2) herum, um einen Kreis mit einem Durchmesser von 2e+t auszubilden;
(b2) Drehen des inneren Rotors (1) auf seiner eigenen Achse 1/n-mal, während der Mittelpunkt des inneren Rotors (1) eine Umdrehung in der kreisförmigen Umflaufbahn ausführt, wobei "n" die Anzahl von Zähnen des inneren Rotors (1) ist;
(b3) Ziehen der Hüllkurve der Gruppe der Zahnprofilkurven des inneren Rotors (1), die durch seine Umdrehung gebildet wird, und
(b4) Verwenden der Hüllkurve als das Zahnprofil des äußeren Rotors (2).

2. Innenzahnradpumpe, die umfasst:
einen inneren Rotor (1) mit einem Kopfteil und einem Fußteil, wobei der Fußteil durch eine Hypozykloide gebildet wird; und
einen äußere Rotor (2),
wobei der innere und der äußere Rotor (1, 2) eine Nenn-Exzentrizität e zwischen dem Mittelpunkt des inneren Rotors (1) und dem Mittelpunkt des äußeren Rotors (2) haben und einen Maximalwert t des Zwischenrotorabstandes haben, der als der minimale Abstand zwischen jedem Zahn des inneren Rotors (1) und dem gegenüberliegenden Zahn des äußeren Rotors (2), wenn der innere Rotor (1) an den äußeren Rotor (2) gepresst wird, an der Position definiert ist, an der die Zähne der zwei Rotoren in Eingriff sind;
**dadurch gekennzeichnet, dass**
(a) der Kopfteil des inneren Rotors (1) durch eine glatte Kurve gebildet wird, die durch eine Trochoiden-, eine Spline-Kurve oder einen Hauptabschnitt einer äußeren Hälfte einer Ellipse umfasst, deren Hauptachse senkrecht zu einem Radius des inneren Rotors (1) ist, und **dadurch**, dass
(b) der äußere Rotor (2) ein Zahnprofil hat, das durch die folgenden Schritte bestimmt wird:
(b1) Rotieren des Mittelpunktes des inneren Rotors (1) um den Mittelpunkt des äußeren Rotors (2) herum, um einen Kreis mit einem Durchmesser von 2e+t auszubilden;
(b2) Drehen des inneren Rotors (1) auf seiner eigenen Achse 1/n-mal, während der Mittelpunkt des inneren Rotors (1) eine Umdrehung auf der kreisförmigen Umlaufbahn ausführt, wobei "n" die Anzahl von Zähnen des inneren Rotors (1) ist;
(b3) Ziehen der Hüllkurve der Gruppe der Zahnprofilkurven des inneren Rotors (1), die durch seine Rotation gebildet wird, und
(b4) Verwenden der Hüllkurve als das Zahnprofil des äußeren Rotors (2).

3. Innenzahnradpumpe nach einem der Ansprüche 1 oder 2, wobei:
(a1) der Kopfteil des inneren Rotors (1) durch die folgenden Schritte modifiziert wird:
(a1a) Rotieren des Mittelpunktes eines provisorischen inneren Rotors um den Mittelpunkt eines provisorischen äußeren Rotors herum, um einen Kreis mit einem Durchmesser von 2e+t auszubilden;
(a1b) Drehen des provisorischen inneren Rotors auf seiner eigenen Achse 1/n-mal, während der Mittelpunkt des provisorischen inneren Rotors eine Umdrehung in der kreisförmigen Umlaufbahn ausführt;
(a1c) Ziehen der Hüllkurve der Gruppe der Zahnprofilkurven des provisorischen inneren Rotors, die durch seine Umdrehung gebildet wird;
(a1d) Verwenden der Hüllkurve als das Zahnprofil des provisorischen äußeren Rotors;
(a1e) durch Verwenden der Zahnprofile des provisorischen inneren und äußeren Rotors Bestimmen der Position des hinteren Endes einer Kopfflanke, die erforderlich ist, um die Pumpenkammer zu verschließen, in dem Kopfteil des provisorischen inneren Rotors;
wobei sich das vordere Ende der Kopfflanke an der Oberseite des Kopfteils befindet;
(a1f) Bestimmen der Position des Zahneingriffspunktes, an dem der provisorische innere Rotor mit dem provisorischen äußeren Rotor in Eingriff ist;
(a1g) Verschieben der Position einer weiteren Kopfflanke, die an dem Ort liegt, gegenüber der Position des oben beschriebenen hinteren Endes zu dem Zahneingriffspunkt an eine Stelle im Inneren der Kurve, die das ursprüngliche Zahnprofil bildet; und
(a1h) Verwenden des Profils nach der Positionsmodifikation als das Zahnprofil des Kopfteils des inneren Rotors.

## Revendications

1. Pompe à engrenage interne comprenant :
(a) un rotor interne (1) ayant une saillie formée par un épicycloïde et un creux formé par un hypocycloïde ; et
(b) un rotor externe (2) ;
les rotors interne et externe (1, 2) ayant une excentricité nominale e entre le centre du rotor interne (1) et le centre du rotor externe (2) et ayant une valeur maximale t du jeu entre les rotors défini comme étant le jeu minimal entre chaque dent du rotor interne (1) et la dent opposée du rotor externe (2) lorsque le rotor interne (1) est comprimé contre le rotor externe (2) au niveau de la position où les dents des deux rotors s'engrènent ; **caractérisée en ce que** ledit rotor externe (1) présente un profil de denture déterminé à l'aide des étapes suivantes :
(b1) révolution du centre du rotor interne (1) autour du centre du rotor externe (2) de façon à former un cercle ayant un diamètre égal à 2e + t ;
(b2) rotation du rotor interne (1) autour de son propre axe 1/n fois pendant que le centre du rotor interne (1) effectue une révolution sur l'orbite circulaire, « n » étant le nombre de dents du rotor interne (1) ;
(b3) tracé de l'enveloppe du groupe des courbes du profil de denture du rotor interne (1) formée par sa révolution ; et
(b4) utilisation de l'enveloppe comme le profil de denture du rotor externe (2).

2. Pompe à engrenage interne comprenant :
un rotor interne (1) ayant une saillie et un creux, le creux étant formé par un hypocycloïde ; et
un rotor externe (2) ;
les rotors interne et externe (1, 2) ayant une excentricité nominale e entre le centre du rotor interne (1) et le centre du rotor externe (2) et ayant une valeur maximale t du jeu entre les rotors défini comme étant le jeu minimal entre chaque dent du rotor interne (1) et la dent opposée du rotor externe (2) lorsque le rotor interne (1) est comprimé contre le rotor externe (2) au niveau de la position où les dents des deux rotors s'engrènent ;
**caractérisée en ce que**
(a) ladite saillie du rotor interne (1) est formée par une courbe lisse comprenant une courbe trochoïdale, une courbe spline ou bien une grande partie d'une moitié extérieure d'une ellipse dont le grand axe est perpendiculaire à un rayon du rotor interne (1),
et **en ce que**
(b) ledit rotor externe (2) présente un profil de denture déterminé à l'aide des étapes suivantes :
(b1) révolution du centre du rotor interne (1) autour du centre du rotor externe (2) de façon à former un cercle ayant un diamètre égal à 2e + t ;
(b2) rotation du rotor interne (1) autour de son propre axe 1/n fois pendant que le centre du rotor interne (1) effectue une révolution sur l'orbite circulaire, « n » étant le nombre de dents du rotor interne (1) ;
(b3) tracé de l'enveloppe du groupe des courbes du profil de denture du rotor interne (1) formée par sa révolution ; et
(b4) utilisation de l'enveloppe comme le profil de denture du rotor externe (2).

3. Pompe à engrenage interne selon l'une des revendications 1 ou 2, dans laquelle :
(a1) la saillie du rotor interne (1) est modifiée à l'aide des étapes suivantes :
(a1a) révolution du centre d'un rotor interne provisoire autour du centre d'un rotor externe provisoire de façon à former un cercle ayant un diamètre égal à 2e+t;
(a1b) rotation du rotor interne provisoire autour de son propre axe 1/n fois pendant que le centre du rotor interne provisoire effectue une révolution sur l'orbite circulaire ;
(a1c) tracé de l'enveloppe du groupe de courbes du profil de denture du rotor interne provisoire formée par sa révolution ;
(a1d) utilisation de l'enveloppe comme profil de denture du rotor externe provisoire ;
(a1e) à l'aide des profils de dentures des rotors interne et externe provisoires, détermination de la position de l'extrémité arrière d'une face de dent, nécessaire pour délimiter la chambre de la pompe, dans la saillie du rotor interne provisoire ;
la face de la dent ayant son extrémité avant en haut de la saillie ;
(a1f) détermination de la position du point d'engrènement de la dent à l'endroit où le rotor interne provisoire s'engrène avec le rotor externe provisoire ;
(a1g) décalage de la position d'une autre face de dent se trouvant à cet endroit de la position de l'extrémité arrière décrite ci-dessus vers le point d'engrènement de la dent à un endroit à l'intérieur de la courbe formant le profil original de la denture ; et
(a1h) utilisation du profil après la modification de la position comme profil de denture de la saillie du rotor interne.
